# EUROPEAN PATENT APPLICATION

(11) **EP 4 398 656 A1**
(43) Date of publication of application: **10.07.2024**
(21) Application number: 21955543.0
(22) Date of filing: 03.09.2021
(51) Int. Cl.: H04W 56/00

(54) **TIMING ADVANCE VALUE REPORTING METHOD AND APPARATUS, AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Kudlek, Franz Thomas
(86) International application number: PCT/CN2021/116549
(87) International publication number: WO 2023/029010

(57) **Abstract**

A timing advance (TA) value reporting method and apparatus, and a storage medium. The TA value reporting method is applied to a terminal, and comprises: sending TA value information to a network device, wherein the TA value information comprises at least time information of a TA value determined by an application terminal. The TA value reporting method is applied to a network device, and comprises: obtaining TA value information sent by a terminal, wherein the TA value information comprises at least time information of a TA value determined by an application terminal. The method enables a network device to accurately determine time information when a TA value is applicable, so as to accurately determine a TA value, so that a terminal and the network device have consistent understanding of the TA value, thereby improving the accuracy of the scheduling of the network device.

## Description

### TECHNICAL FIELD

The present disclosure relates to a field of communication technology, and more particularly to a method for reporting a time advance (TA) value, an apparatus for reporting a TA value and a storage medium.

### BACKGROUND

In the related communication technology, communication based on a terrestrial network (TN) is supported. When performing the communication based on the TN, a network device sends a time advance (TA) value to a terminal, so that the terminal adjusts an uplink transmission time based on the TA value during an uplink transmission.

However, a non-terrestrial network (NTN) is introduced into the new generation communication technology. In the NTN, positions of the terminal and a satellite change dynamically, and the terminal calculates and performs piecewise adjustment on the TA value of the uplink transmission by itself based on its own position and the position of the satellite during the uplink transmission. The adjustment value of the TA value is unknown to the network device. However, even though the terminal is supported to report the TA value calculated by the UE to the network device in the related technology, the TA value may have changed during the process of the terminal reporting the TA value, which may cause that an inaccurate TA value is received by the network device.

### SUMMARY

In order to overcome problems existing in the related technology, the present disclosure provides a method for reporting a time advance (TA) value, an apparatus for reporting a TA value and a storage medium.

According to a first aspect of the embodiments of the present disclosure, a method for reporting a TA value is provided. The method is applied to a terminal and includes:
sending TA value information to a network device, in which the TA value information at least includes information of time when a TA value determined by the terminal is applied.

In an implementation, sending the TA value information to the network device includes: sending a first type of TA value information to the network device, in which the first type of TA value information is configured to indicate a plurality of TA values, and TA value time information corresponding respectively to the plurality of TA values.

In an implementation, sending the TA value information to the network device includes:
sending a second type of TA value information to the network device; in which the second type of TA value information is configured to indicate a TA value calculated at a specified time.

In an implementation, sending the TA value information to the network device includes:
determining a type of TA value information to be sent to the network device, in which the type of TA value information includes a first type of TA value information or a second type of TA value information; and sending the TA value information matching the type;
in which the first type of TA value information is configured to indicate a plurality of TA values, and TA value time information corresponding respectively to the plurality of TA values; the second type of TA value information is configured to indicate a TA value calculated at a specified time.

In an implementation, the TA value time information includes at least one of:
a valid time of a TA value;
a calculation time a TA value;
a time drift a TA value; or
a time interval between adjacent TA values.

In an implementation, the specified time is determined in at least one of following ways:
based on a time unit when the terminal receives an uplink scheduling signaling and a processing time for the uplink scheduling signaling;
based on a start time unit when the terminal sends a first one of uplink signals;
based on a time unit when a first one of uplink signals sent by the terminal is expected to arrive at the network device for the first time;
based on an end time unit for the terminal to send a single uplink signal; or
based on a time unit when a single uplink signal sent by the terminal is expected to arrive at the network device at last.

In an implementation, the way to determine the specified time is determined based on at least one of:
explicit indication information sent by the network device;
implicit indication information sent by the network device; or
a predefined rule.

In an implementation, determining the type of TA value information to be sent to the network device includes:
receiving instruction information, in which the instruction information is configured to instruct the terminal to send the first type of TA value information or to send the second type of TA value information.

In an implementation, determining the type of TA value information to be sent to the network device includes:
determining the type of TA value information to be sent to the network device based on a TA value transmission duration and a transmission duration threshold; in which in a case that the TA value transmission duration is greater than or equal to the transmission duration threshold, the first type of TA value information is sent; in a case that the TA value transmission duration is less than the transmission duration threshold, the second type of TA value information is sent.

In an implementation, the TA value information is carried in a media access control (MAC) control element (CE).

According to a second aspect of the embodiments of the present disclosure, a method for reporting a TA value is provided. The method is applied to a network device and includes:
obtaining TA value information sent by a terminal, in which the TA value information at least includes information of time when a TA value determined by the terminal is applied.

In an implementation, obtaining the TA value information sent by the terminal includes:
obtaining a first type of TA value information, in which the first type of TA value information is configured to indicate a plurality of TA values, and TA value time information corresponding respectively to the plurality of TA values.

In an implementation, obtaining the TA value information sent by the terminal includes: obtaining a second type of TA value information, in which the second type of TA value information is configured to indicate a TA value calculated at a specified time; in which the method further includes: determining, based on the second type of TA value information, another TA value different from the TA value indicated by the second type of TA value information.

In an implementation, the TA value time information includes at least one of:
a valid time of a TA value;
a calculation time of a TA value;
a time drift of a TA value; or
a time interval between adjacent TA values.

In an implementation, the specified time is determined in at least one of following ways:
based on a time unit when the terminal receives an uplink scheduling signaling and a processing time for the uplink scheduling signaling;
based on a start time unit when the terminal sends a first one of uplink signals;
based on a time unit when a first one of uplink signals sent by the terminal is expected to arrive at the network device for the first time;
based on an end time unit for the terminal to send a single uplink signal; or
based on a time unit when a single uplink signal sent by the terminal is expected to arrive at the network device at last.

In an implementation, the way to determine the specified time is determined based on at least one of:
explicit indication information sent by the network device;
implicit indication information sent by the network device; or
a predefined rule.

In an implementation, the method further includes: sending instruction information, in which the instruction information is configured to instruct the terminal to send the first type of TA value information or to send the second type of TA value information.

In an implementation, the TA value information is carried in a media access control (MAC) control element (CE).

According to a third aspect of the embodiments of the present disclosure, an apparatus for reporting a TA value is provided. The apparatus includes:
a processing unit configured to determine a TA value; a sending unit configured to send TA value information to a network device, in which the TA value information at least includes information of time when the TA value is applied.

In an implementation, the sending unit is configured to send a first type of TA value information to the network device, in which the first type of TA value information is configured to indicate a plurality of TA values, and TA value time information corresponding respectively to the plurality of TA values.

In an implementation, the sending unit is configured to send a second type of TA value information to the network device; in which the second type of TA value information is configured to indicate a TA value calculated at a specified time.

In an implementation, the sending unit is configured to determine a type of TA value information to be sent to the network device, in which the type of TA value information includes a first type of TA value information or a second type of TA value information; and send the TA value information matching the type; in which the first type of TA value information is configured to indicate a plurality of TA values, and TA value time information corresponding respectively to the plurality of TA values; the second type of TA value information is configured to indicate a TA value calculated at a specified time.

In an implementation, the TA value time information includes at least one of:
a valid time of a TA value;
a calculation time of a TA value;
a time drift of a TA value; or
a time interval between adjacent TA values.

In an implementation, the specified time is determined in at least one of following ways:
based on a time unit when the terminal receives an uplink scheduling signaling and a processing time for the uplink scheduling signaling;
based on a start time unit when the terminal sends a first one of uplink signals;
based on a time unit when a first one of uplink signals sent by the terminal is expected to arrive at the network device for the first time;
based on an end time unit for the terminal to send a single uplink signal; or
based on a time unit when a single uplink signal sent by the terminal is expected to arrive at the network device at last.

In an implementation, the way to determine the specified time is determined based on at least one of:
explicit indication information sent by the network device;
implicit indication information sent by the network device; or
a predefined rule.

In an implementation, the apparatus further includes: a receiving unit, configured to receive instruction information, in which the instruction information is configured to instruct the terminal to send the first type of TA value information or to send the second type of TA value information.

In an implementation, the sending unit is configured to determine the type of TA value information to be sent to the network device based on a TA value transmission duration and a transmission duration threshold; in which in a case that the TA value transmission duration is greater than or equal to the transmission duration threshold, the first type of TA value information is sent; in a case that the TA value transmission duration is less than the transmission duration threshold, the second type of TA value information is sent.

In an implementation, the TA value information is carried in a media access control (MAC) control element (CE).

According to a fourth aspect of the embodiments of the present disclosure, an apparatus for reporting a TA value is provided. The apparatus includes:
an obtaining unit configured to obtain TA value information sent by a terminal, in which the TA value information at least includes information of time when a TA value determined by the terminal is applied.

In an implementation, the obtaining unit is configured to obtain a first type of TA value information, in which the first type of TA value information is configured to indicate a plurality of TA values, and TA value time information corresponding respectively to the plurality of TA values.

In an implementation, the obtaining unit is configured to obtain a second type of TA value information, in which the second type of TA value information is configured to indicate a TA value calculated at a specified time; in which the method further includes: determining, based on the second type of TA value information, another TA value different from the TA value indicated by the second type of TA value information.

In an implementation, the TA value time information includes at least one of:
a valid time of a TA value;
a calculation time of a TA value;
a time drift of a TA value; or
a time interval between adjacent TA values.

In an implementation, the specified time is determined in at least one of following ways:
based on a time unit when the terminal receives an uplink scheduling signaling and a processing time for the uplink scheduling signaling;
based on a start time unit when the terminal sends a first one of uplink signals;
based on a time unit when a first one of uplink signals sent by the terminal is expected to arrive at the network device for the first time;
based on an end time unit for the terminal to send a single uplink signal; or
based on a time unit when a single uplink signal sent by the terminal is expected to arrive at the network device at last.

In an implementation, the way to determine the specified time is determined based on at least one of:
explicit indication information sent by the network device;
implicit indication information sent by the network device; or
a predefined rule.

In an implementation, the apparatus further includes: a sending unit configured to send instruction information, in which the instruction information is configured to instruct the terminal to send the first type of TA value information or to send the second type of TA value information.

In an implementation, the TA value information is carried in a media access control (MAC) control element (CE).

According to a fifth aspect of the embodiments of the present disclosure, an apparatus for reporting a TA value is provided. The apparatus includes:
a processor; and a memory for storing instructions executable by the processor;
in which the processor is configured to perform the method for reporting a TA value of the first aspect or any one of implementations of the first aspect.

According to a sixth aspect of the embodiments of the present disclosure, an apparatus for reporting a TA value is provided. The apparatus includes:
a processor; and a memory for storing instructions executable by the processor;
in which the processor is configured to perform the method for reporting a TA value of the second aspect or any one of implementations of the second aspect.

According to a seventh aspect of the embodiments of the present disclosure, storage medium having instructions stored therein is provided. When the instructions in the storage medium are executed by a processor of a terminal, the terminal is caused to perform the method for reporting a TA value of the first aspect or any one of implementations of the first aspect.

According to an eighth aspect of the embodiments of the present disclosure, storage medium having instructions stored therein is provided. When the instructions in the storage medium are executed by a processor of a terminal, the terminal is caused to perform the method for reporting a TA value of the first aspect or any one of implementations of the first aspect.

The technical solution provided by the embodiments of the present disclosure may include the following beneficial effects: the terminal sends the TA value information to the network device, and the TA value information includes at least the information of time when the TA value determined by the terminal is applied, so that the network device can accurately determine the information of available time of the TA value, and then can accurately determine the TA value, thus the terminal and the network device may have a consistent understanding of the TA value, and an accuracy of scheduling of the network device is improved.

It is understandable that the above general description and the following detailed descriptions are illustrative and explanatory only and are not used to limit the disclosure.

### BRIEF DESCRIPTION OF THE DRAWINGS

The accompanying drawings, which are incorporated in and constitute a part of this specification, illustrate embodiments consistent with the disclosure and together with the description serve to explain the principles of the disclosure.
FIG. 1 is a schematic diagram of a satellite communication system according to an embodiment.
FIG. 2 is a schematic diagram of a satellite communication system deployed with a base station involved in an embodiment of the disclosure.
FIG. 3 is a schematic diagram of a satellite communication system deployed with a base station involved in an embodiment of the disclosure.
FIG. 4 is a flowchart of a method for reporting a time advance (TA) value according to an embodiment of the present disclosure.
FIG. 5 is a flowchart of a method for sending a first type of TA value information according to an embodiment of the disclosure.
FIG. 6 is a flowchart of a method for sending a second type of TA value information according to an embodiment of the disclosure.
FIG. 7 is a flowchart of a method for sending TA value information based on a determined type of the TA value information according to an embodiment of the disclosure.
FIG. 8 is a flowchart of a method for reporting a TA value according to an embodiment of the present disclosure.
FIG. 9 is a block diagram of an apparatus for reporting a TA value according to an embodiment of the present disclosure.
FIG. 10 is a block diagram of an apparatus for reporting a TA value according to an embodiment of the present disclosure.
FIG. 11 is a block diagram of an apparatus for reporting a TA value according to an embodiment of the present disclosure.
FIG. 12 is a block diagram of an apparatus for reporting a TA value according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

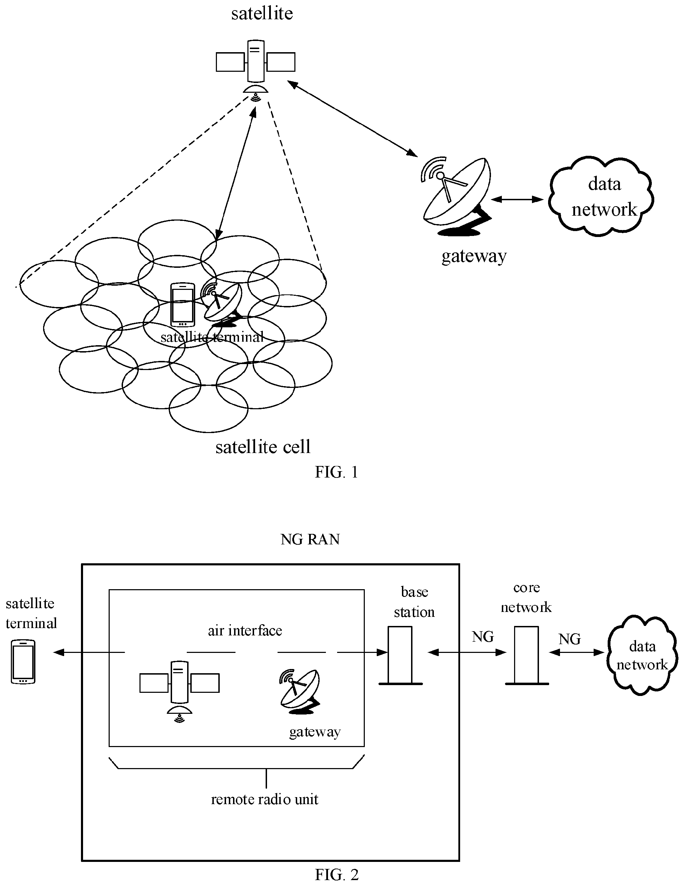

The method for reporting a time advance (TA) value provided in the embodiments of the present disclosure is applied to a non-terrestrial network (NTN), for example, to a satellite communication system or a high altitude platform station (HAPS) communication system. Embodiments of the present disclosure are described by taking the satellite communication system as an example. FIG. 1 is a schematic diagram of a satellite communication system according to an embodiment. Referring to FIG. 1, a satellite sends beams through an antenna to form a satellite cell covered by a satellite network. The satellite is in a movement state. The satellite cell may also be called a Beam foot print. Coverage areas between the satellite cells may not overlap, may also partially overlap, or may also completely overlap. Satellite terminals can be deployed within a coverage range of the satellite network. The satellite terminal located within the coverage range of the satellite network performs communication through a service link between the satellite cell and the satellite. The satellite communicates with a ground infrastructure (such as a gateway) through a feeder link, and then realizes interactive communication with a ground communication network, such as a core network and a data network.

The terminal referred to in the embodiments of the present disclosure may include, but is not limited to: a cellular and/or satellite wireless phone with or without a multiline display; personal communication system (PCS) terminal which may combine a wireless phone with capabilities of data processing, faxing and/or data communication; a personal digital assistant (PDA) including a radio frequency transceiver and a pager, Internet/Intranet access, a web browser, a manager, a calendar, and/or a global positioning system (GPS) receiver; and/or other devices including radio frequency transceivers. The terminal involved in the embodiments of the present disclosure may be sometimes called a satellite terminal, a wireless phone, or a terminal, and may also be called a terminal device, a user equipment (UE), a mobile station (MS), a mobile terminal (MT), etc.

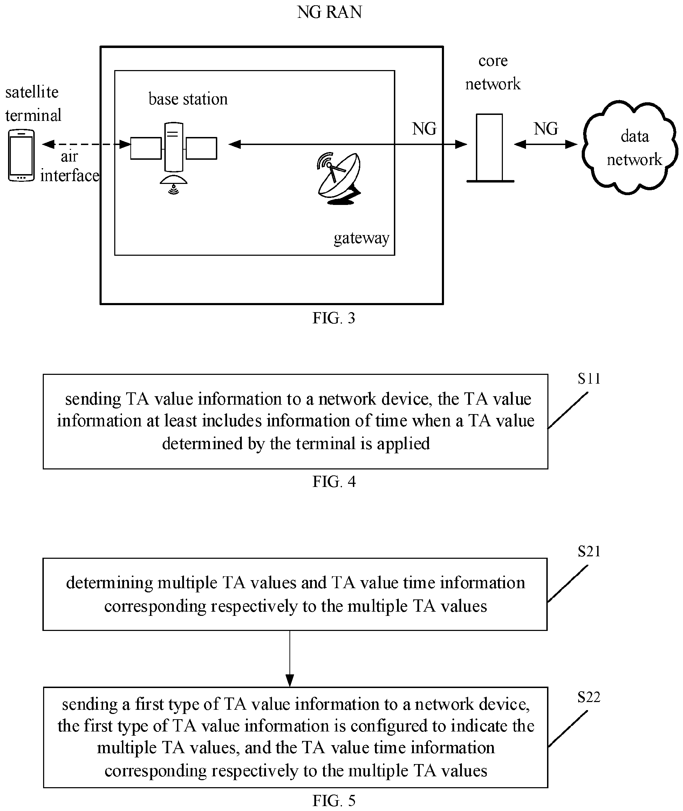

The network device involved in the embodiments of the present disclosure may include, but is not limited to, a wireless base station, a satellite base station, a wireless transceiver device placed on an aircraft that stay at high altitude for a long time, or a ground base station. The network device involved in the embodiments of the present disclosure may also be understood as one or more infrastructure units deployed in the satellite communication system. FIG. 2 and FIG. 3 respectively illustrate schematic diagrams of a satellite communication system deployed with a base station involved in an embodiment of the present disclosure. In FIG. 2, the base station (such as gNB in the 5G network) is independent of the satellite and the gateway in a remote radio unit. The satellite terminal accesses the base station through an air interface (uu), such as a new radio (NR) uu, and connects to a core network and a data network through an NG interface for communication. The base station, the satellite and the gateway can be understood as an NG radio access network (RAN). In FIG. 3, the base station (such as gNB in the 5G network) can be deployed together with the satellite, and form the NG RAN with the gateway. The satellite terminal connects to the base station through the air interface, and connects to the core network and the data network through the NG interface for communication.

In the NTN introduced into the new generation communication technology, the positions of the terminal and the satellite change dynamically, and the terminal calculates and performs piecewise adjustment on a TA value of an uplink transmission by itself based on its own position and the position of the satellite during the uplink transmission.

The new generation communication technology involves the Internet of Things (IoT)-NTN system, and even the narrow band Internet to Things (NB-IoT)-NTN system. In the IoT-NTN system, multiple repetitions of a long physical uplink shared channel (PUSCH) or a long physical random access channel (PRACH) are involved. In the NB-IoT-NTN system, multiple repetitions of the long NPUSCH are involved. The changed TA value involved in a long PUSCH/long PRACH, or long NPUSCH transmission process may also be referred to as a UE-satellite delay/UE-gNB delay/UE-GW delay value. In the embodiments of the present disclosure, the UE-satellite delay/UE-gNB delay/UE-GW delay value and the TA value are sometimes used interchangeably, and those skilled in the art should understand the consistency of their meanings. In the following embodiments of the present disclosure, the UE-satellite delay value is taken as an example for description, and the UE-satellite delay value in the embodiments of the present disclosure may be replaced by the UE-gNB delay/UE-GW delay value.

However, during the transmission of long PUSCH/long PRACH, or long NPUSCH, the degree of change in the TA value calculated and reported by the terminal may approach or exceed the scheduling granularity. For example, in the NB-IoT-NTN system, the longest transmission time for one transmission of message 3 (Msg. 3) is 16*0.5ms*10*128 = 10.24s in the case that a subcarrier spacing (SCS) is 15KHZ, while the longest transmission time is 40.96s in the case that the SCS is 3.75KHz. In the NTN system, assuming that the feeder link has been compensated by the base station or the base station is located on the satellite, the maximum round trip delay (RTD) variation is 20us/s @LEO 600km. Assuming that the feeder link is not compensated by the base station and the base station is located on the ground, the maximum RTD variation is 40us/s @LEO 600km.

In summary, the time drift for one transmission of Msg. 3 is 20 x 10.24 = 205us (SCS = 15KHz) (feeder link is compensated by the base station), or 40 x 10.24 = 410us (SCS = 15KHz) (feeder link is not compensated by the base station), which is close to the minimum scheduling granularity (i.e., 1 slot, 0.5ms) in NB-IoT. Considering that the number of repetitions may be further increased in order to enhance (coverage) in the IoT-NTN, the time drift value of the terminal in one long PUSCH transmission may be further increased, which may exceed the scheduling granularity.

In the case that the time drift value in the long PUSCH transmission exceeds the scheduling granularity, during an uplink transmission, the terminal calculates and performs piecewise adjustment on the TA value of the uplink transmission by itself based on its own position and the position of the satellite. And, in the NR-NTN, it is agreed to include the TA value calculated by the UE in a medium access control (MAC) control element (CE) to be transmitted in message A (msg. A) or message 3 (msg. 3) or message 5 (msg. 5), so that the network device can obtain the TA (UE-satellite delay) value calculated by the UE, so as to more effectively schedule terminals located at different locations in the cell. However, in the long PUSCH transmission scenario, the TA value may have changed during the repetition transmission, and the degree of change may exceed one scheduling granularity. Therefore, the following problems may exist in the situation that the terminal reports the TA value to the network device.
(1) The change in the TA value is related to a transmission duration. If the transmission duration is short, and the change in the TA value is smaller than the scheduling granularity, and it may not be necessary to update the TA value. If the transmission duration is long, for example the number of repetitions is large, and the change in the TA value exceeds the scheduling granularity, this change needs to be reflected in the UE-specific TA report of msg. A or msg. 3 or msg. 5.
(2) How to make the TA-related information included in msg. A or msg. 3 or msg. 5 reflect this change.
(3) If only one TA value is reported, how to enable the network device and the terminal to have a unified understanding of the single TA value.

In view of this, embodiments of the present disclosure provide a method for reporting a TA value. In the method, the terminal reports to the network device the information at least including information of time when the TA value calculated by the terminal is applied, so that the network device can accurately determine information of available time of the TA value, and then accurately determine the TA value, thus the terminal and the network device have a consistent understanding of the TA value, and an accuracy of scheduling of the network device is improved.

In the embodiments of the present disclosure, for the convenience of description, the information including the information of time when the TA value calculated by the terminal is applied is referred to as TA value information.

Fig. 4 is a flowchart illustrating a method for reporting a TA value according to an embodiment. As shown in FIG. 4, the method for reporting a TA value is applied in a terminal, and includes the following steps.

At step S11, TA value information is sent to a network device. The TA value information at least includes information of time when a TA value determined by the terminal is applied.

In the embodiment of the present disclosure, the TA value determined by the terminal can be understood as the TA value calculated and determined by the terminal based on the position of the terminal and the position of the network device (a satellite base station, a wireless base station on a high-altitude aircraft, a wireless transceiver base station, etc.). Further, the TA value can also be understood as the UE-specific TA needed to be reported in msg. A or msg. 3 or msg. 5 in the case that the TA value changes during the TAreporting process due to changes in the relative position of the terminal and the network device, and that the change exceeds the scheduling granularity.

It can be understood that the embodiment of the present disclosure may include a step of the terminal determining the TA value, or may not include the step of the terminal determining the TA value.

In the embodiments of the present disclosure, the information of time when the determined TA value is applied can be understood as a time for the network device and the terminal to perform subsequent communication on the TA value calculated and reported by the terminal (for example, the network device schedules the terminal). The time may be a time when the terminal calculates the TA value, or may be a time range during which the TA value calculated and determined by the terminal changes.

TA can be understood as a reflection of a distance between the terminal and network device (such as the satellite) through a time length, and the change in the TA value is mainly due to a change in the time length caused by a relative movement of network device (such as the satellite) and the terminal. Therefore, in the embodiments of the present disclosure, the information of time of the TA value included in the TA value information can be understood as a kind of information reflecting the change in the TA value.

In the embodiments of the present disclosure, the TA value information sent by the terminal to the network device may be carried in a MAC CE. For example, the TA value information can be reported through the UE-specific TA MAC CE in Msg. 3\Msg. 5\Msg. A. Of course, the way of sending the TA value information is not limited in the embodiments of the present disclosure, and the TA value information may be carried in other information than the MAC CE.

In an implementation, the TA value information sent by the terminal to the network device in the embodiments of the present disclosure includes multiple TA values, and TA value time information corresponding respectively to the multiple TA values. Hereinafter, for convenience of description, the TA value information including the multiple TA values and the TA value time information corresponding respectively to the multiple TA values is referred to as a first type of TA value information. That is, the first type of TA value information is configured to indicate multiple TA values, and TA value time information corresponding respectively to the multiple TA values. The first type of TA value information being configured to indicate the TA value time information corresponding respectively to the multiple TA values can be understood that the first type of TA value information is configured to reflect multiple TA values and change information of the multiple TA values.

In another implementation, the TA value information sent by the terminal to the network device in the embodiments of the present disclosure includes a TA value calculated by the terminal at a specified time. Hereinafter, for convenience of description, the TA value information including the TA value calculated by the terminal at the specified time is referred to as a second type of TA value information.

In the embodiments of the present disclosure, whether the terminal sends the first type of TA value information or the second type of TA value information may be determined as follows. On the one hand, the terminal may directly send the first type of TA value information or the second type of TA value information in a predefined manner. On the other hand, a network configuration mode can also be used, so that the terminal determines whether a type of the TA value information to be sent is the first type of TA value information or the second type of TA value information based on configuration information, and then the terminal sends the TA value information that matches the determined type.

In the embodiments of the present disclosure, an implementation in which the terminal directly sends the first type of TA value information in the predefined manner is firstly described.

FIG. 5 is a flowchart illustrating a method for sending a first type of TA value information according to an embodiment. As shown in FIG. 5, the method includes the following steps.

At step S21, multiple TA values and TA value time information corresponding respectively to the multiple TA values are determined.

At step S22, a first type of TA value information is sent to a network device, the first type of TA value information is configured to indicate the multiple TA values, and the TA value time information corresponding respectively to the multiple TA values.

In the embodiment of the present disclosure, the multiple TA values determined by the terminal include TA values calculated by the terminal based on different terminal positions and/or different network device positions.

Further, the TA value time information corresponding to the TA value includes at least one of: a valid time (also referred to as valid timer) of a TA value, a time drift of a TA value, a calculation time (such as a slot for determining the TA value, a universal time (UTC) etc.) of of a TA value, or a time interval between adjacent TA values (N*slot, N*Resource Unit (RU), N*number of repetitions).

In an example, when the TA value time information includes the TA value valid time, the terminal can report multiple UE-satellite delay values and the valid time of each UE-satellite delay value, for example, the terminal reports {TA#1, TA#1 valid timer; TA#2, TA#2 valid timer}; {TA#1, Rep#128; TA#2, Rep#256}.

In another example, when the TA value time information includes the TA value time drift, the terminal can report the UE-satellite delay value and the UE-satellite delay drift value, for example, the terminal reports {TA1, TA1 drift}, {TA2, TA2 drift}.

In another example, when the TA value time information includes the TA value calculation time, the terminal may report the UE-satellite delay value and the time when the TA value is calculated, for example, the terminal reports {TA1, slot n; TA2, slot m}; {TA1, UTC 08:0000; TA2, UTC 08:00001}. In another example, when the TA value time information includes the time interval between adjacent TA values, the terminal reports multiple UE-satellite delay values according to the time interval, such as two TA values {TA#1; TA#2} satisfying that the reporting time interval is N*slot, N*RU, or N*repetition etc.. The time interval between the two TA values reported by the terminal may be predefined by the network device, or may be indicated to the terminal by the network device through radio resource control (RRC) and other information, which is not limited in the embodiments of the disclosure.

In an implementation, the TA value information sent by the terminal to the network device in the embodiments of the disclosure may be the second type of TA value information directly sent in the predefined manner.

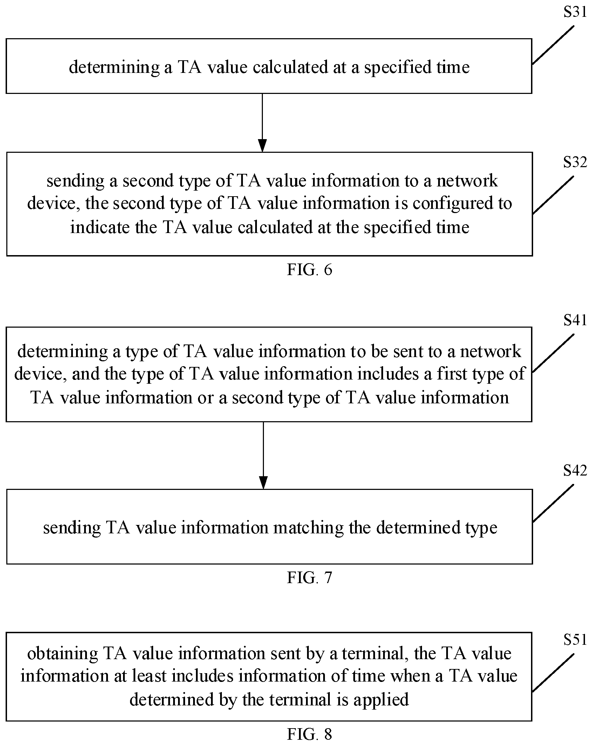

FIG. 6 is a flowchart illustrating a method for sending a second type of TA value information according to an embodiment. As shown in FIG. 6, the method includes the following steps.

At step S31, a TA value calculated at a specified time is determined.

At step S32, a second type of TA value information is sent to a network device, the second type of TA value information is configured to indicate the TA value calculated at the specified time.

In the embodiments of the present disclosure, the TA value calculated at the specified time and reported by the terminal may be understood as one of multiple TA values that the network device needs to determine, and of course may be several TA values. The terminal reports some TA values, and the network device can calculate the UE-satellite delay at any time according to some parameters, such as the number of repetitions (also referred to as repetition number) configured for the terminal, a direction of arrival of the terminal's uplink signal, a satellite ephemeris, etc.

The specified time for the terminal to calculate the TA value in the embodiments of the present disclosure may be a specified time unit, and the time unit may be a frame, or a slot, or may also be a subframe. In the following embodiments of the present disclosure, sometimes a slot is taken as an example for illustration. It is understandable that the slot may also be replaced by a frame or a subframe.

For example, in the embodiments of the present disclosure, the specified time unit is determined in at least one of the following ways.

Way 1, the specified time unit is determined based on a time unit when the terminal receives an uplink scheduling signaling and a processing time for the uplink scheduling signaling.

In an example, it is assumed that the uplink scheduling signaling is downlink control information (DCI), and the time unit is slot. If the time moment when the terminal receives the uplink scheduling DCI is slot n, the specified time is slot n+X, where X includes at least the processing time for the DCI. It is understood that X may be equal to 0.

Way 2, the specified time unit is determined based on a start time unit when the terminal sends a first one of uplink signals.

In an example, it is assumed that the start time moment when the terminal sends the first one of uplink signals is slot n, the specified time unit is slot n.

The uplink signal involved in the embodiments of the present disclosure may be PUSCH, NPUSCH, long PUSCH, Msg3, PRACH and so on. For example, if the uplink signal is PUSCH, the UE-satellite delay calculated by the terminal at the time moment of sending the first PUSCH is reported, so that the network device can calculate the UE-satellite delay at any time based on some parameters, such as the repetition number configured for the terminal, the direction of arrival of the terminal's uplink signal, the satellite ephemeris, etc.

Way 3, the specified time unit is determined based on a time unit when a first one of uplink signals sent by the terminal is expected to arrive at the network device for the first time.

In an example, assuming that the start time moment for the terminal to send the first one of uplink signals is slot n, and that the time when the first one of uplink signals is expected to arrive at the network device (satellite/base station) for the first time is slot n+Y, the specified time unit is slot n+Y.

The uplink signal involved in the embodiments of the present disclosure may be PUSCH, NPUSCH, long PUSCH, Msg3, PRACH, etc. For example, if the uplink signal is PUSCH, the UE-satellite delay calculated by the terminal at the time moment when the first PUSCH arrives at the satellite is reported, so that the network device can calculate the UE-satellite delay at any time based on some parameters, such as the repetition number configured for the terminal, the direction of arrival of the terminal's uplink signal, the satellite ephemeris, etc.

Way 4, the specified time unit is determined based on an end time unit for the terminal to send a single uplink signal.

In an example, assuming that the end time moment for the terminal to send a single uplink signal is slot m, the specified time unit is slot m.

The uplink signal involved in the embodiments of the present disclosure may be PUSCH, NPUSCH, long PUSCH, Msg3, PRACH, etc. For example, if the uplink signal is PUSCH, the UE-satellite delay calculated by the terminal at the time moment of the last repetition PUSCH is reported.

Way 5, the specified time unit is determined based on a time unit when a single uplink signal sent by the terminal is expected to arrive at the network device at last.

In an example, assuming that the end time moment for the terminal to send a single uplink signal is slot m, and that the time when the signal is expected to arrive at the network device (satellite/base station) in the end is slot m+Y, the specified time unit is slot m+Y.

The uplink signal involved in the embodiments of the present disclosure may be PUSCH, NPUSCH, long PUSCH, Msg3, PRACH, etc. For example, if the uplink signal is PUSCH, the UE-satellite delay calculated by the terminal at the time moment when the last repetition PUSCH arrive at the satellite is reported.

In the embodiments of the present disclosure, which one of the above-mentioned ways of determining the specified time is used by the terminal may be indicated by the network device to the terminal through explicit indication information or implicit indication information, or may also be determined by the terminal based on a predefined rule. In other words, the way to determine the specified time is determined in at least one of the following ways: determining based on explicit indication information sent by the network device; determining based on implicit indication information sent by the network device; and determining based on a predefined rule.

In an example, the base station explicitly/implicitly indicates the way to determine the specified time through a bit in the DCI. The above ways 1 to 5 can be understood as being implicitly determined by a certain parameter value configured by the base station, for example, the send start time moment in way 2 is determined by a value indicating a time-domain resource position of the PUSCH transmission in the scheduling DCI.

In an example, the base station specifies the way to determine the specified time through a certain parameter in the RRC.

In an example, the way to determine the specified time may also be a predefined terminal behavior.

The method of reporting the first type of TA value information or the method of reporting the second type of TA value information involved in the above embodiments of the present disclosure can enable the network device to determine the information of time when the TA value calculated by the terminal is applied.

It can be understood that, in some cases, the implementation steps for determining the TA value shown in FIG. 4 , FIG. 5 , and FIG. 6 of the present disclosure may be omitted, but are not mandatory.

In an implementation, when the terminal sends the TA value information to the network device, it may determine a type of the TA value information to be sent to the network device, and then send the TA value information matching the determined type based on the determined type.

FIG. 7 is a flowchart illustrating a method for sending TA value information based on a determined type of the TA value information according to an embodiment. As shown in FIG. 7, the method may include the following steps.

At step S41, a type of TA value information to be sent to a network device is determined, and the type of TA value information includes a first type of TA value information or a second type of TA value information.

The first type of TA value information is configured to indicate multiple TA values, and TA value time information corresponding respectively to the multiple TA values. The second type of TA value information is configured to indicate a TA value calculated at a specified time.

At step S42, TA value information matching the determined type is sent.

In the embodiment of the present disclosure, if the determined type is the first type of TA value information, multiple TA values and TA value time information corresponding respectively to the multiple TA values are sent to the network device. If the determined type is the second type of TA value information, the TA value calculated at the specified time is sent to the network device.

In the embodiments of the present disclosure, for the implementations of sending the first type of TA value information or the second type of TA value information by the terminal, reference can be made to the relevant descriptions of the above embodiments, which will not be described in detail here.

In the embodiments of the present disclosure, an implementation of determining by the terminal the type of TA value information to be sent to the network device is described below.

On one hand, the terminal may determine the type of the TA value information to be sent to the network device based on instruction information sent by the network device. That is, the terminal may determine the type of the TA value information to be sent to the network device based on the explicit instruction information sent by the network device. For example, in DCI/RAR of scheduling Msg. 3, 1 bit is added to instruct the terminal to send the first type of TA value information, reflecting the UE-satellite delay value and its changes, or to instruct the terminal to send the second type of TA value information, reflecting the UE-satellite delay. That is, the terminal receives the instruction information sent by the network device, in which the instruction information is used to instruct the terminal to send the first type of TA value information, or to send the second type of TA value information. The terminal determines the type of the TA value information to be sent based on the instruction information.

On the other hand, the terminal can determine the type of the TA value information to be sent to the network device by itself. It can also be understood that the terminal determines the type of the TA value information to be sent to the network device based on implicit instruction information. For example, the terminal determines the type of the TA value information to be sent to the network device based on a transmission duration of the TA value and a transmission duration threshold. That is, without increasing the number of bits in the DCI/RAR of scheduling Msg. 3, the terminal determines the type of the TA value information to be sent to the network device according to a value affecting the transmission duration in the DCI/RAR of scheduling Msg. 3, such as the number of repetitions.

In the case that the transmission duration of the TA value is greater than or equal to the duration threshold, the first type of TA value information is sent to reflect the UE-satellite delay value and its changes. In the case that the transmission duration of the TA value is less than the transmission duration threshold, the second type of TA value information is sent to reflect the UE-satellite delay value.

With the above method for reporting a TA value provided by the embodiments of the present disclosure, the terminal sends the TA value information to the network device, and the TA value information includes at least the information of time when the TA value determined by the terminal is applied, so that the network device can accurately determine the information of available time of the TA value, and then accurately determine the TA value, thus the terminal and the network device have the consistent understanding of the TA value, and an accuracy of scheduling of the network device is improved.

Based on the same concept, an embodiment of the present disclosure also provides a method for reporting a TA value performed by a network device.

Fig. 8 is a flowchart illustrating a method for reporting a TA value according to an embodiment. The method for reporting a TA value may be executed alone or together with other embodiments in the embodiments of the present disclosure. As shown in FIG. 8, the method for reporting a TA value is applied in a terminal, and includes the following steps.

At step S51, TA value information sent by a terminal is obtained. The TA value information at least includes information of time when a TA value determined by the terminal is applied.

In the embodiment of the present disclosure, the network device may obtain the TA value information sent by the terminal through a MAC CE message reported by the terminal. For example, the TA value information can be obtained through UE-specific TA MAC CE in Msg. 3\Msg. 5\Msg. A. Of course, the manner of obtaining the TA value information is not limited in the embodiments of the present disclosure, and the TA value information may be carried in other information than the MAC CE.

In the embodiments of the present disclosure, the network device obtains the TA value information sent by the terminal, can determine the accurate TA value determined and reported by the terminal and/or change information of the TA value according to the information of time of the TA value included in the TA value information, and determine the TA value used for subsequent scheduling of the terminal.

In an implementation, the network device can obtain the first type of TA value information, the first type of TA value information is configured to indicate multiple TA values, and TA value time information corresponding respectively to the multiple TA values. That is, the network device may directly determine the TA value time information corresponding respectively to the multiple TA values without further corresponding calculation, thereby reducing a calculation complexity of the network device.

The TA value time information involved in the embodiments of the present disclosure includes at least one of: a valid time of a TA value, a time drift of a TA value, a calculation time of a TA value, or a time interval between adjacent TA values.

In another implementation, the network device can obtain the second type of TA value information, the second type of TA value information is configured to indicate a TA value calculated at a specified time. In this case, the network device needs to determine a TA value different from the TA value reported by the terminal based on the second type of TA value information. That is, in this implementation, the network device calculates the required TA value, and the terminal needs not to calculate multiple TA values, thereby reducing a calculation complexity of the terminal.

For example, in the embodiments of the present disclosure, the specified time unit is determined in at least one of the following ways.

Way 1, the specified time unit is determined based on a time unit when the terminal receives an uplink scheduling signaling and a processing time for the uplink scheduling signaling.

Way 2, the specified time unit is determined based on a start time unit when the terminal sends a first one of uplink signals.

Way 3, the specified time unit is determined based on a time unit when a first one of uplink signals sent by the terminal is expected to arrive at the network device for the first time.

Way 4, the specified time unit is determined based on an end time unit for the terminal to send a single uplink signal.

Way 5, the specified time unit is determined based on a time unit when a single uplink signal sent by the terminal is expected to arrive at the network device at last.

The uplink signal involved in the embodiments of the present disclosure may be PUSCH, NPUSCH, long PUSCH, Msg3, PRACH, etc.

Further, the time unit involved in the embodiments of the present disclosure may be a frame, or a slot, or may also be a subframe.

In an implementation, the way to determine the specified time is determined based on explicit indication information sent by the network device, or based on implicit indication information sent by the network device, or based on a predefined rule.

In an implementation, the network device in the embodiments of the present disclosure may send instruction information configured to instruct the terminal to send the first type of TA value information, or to send the second type of TA value information, so as to realize explicit instruction of the type of the TA value information sent by the terminal. For example, in DCI/RAR of scheduling Msg. 3, 1 bit is added to instruct the terminal to send the first type of TA value information, reflecting the UE-satellite delay value and its changes, or to instruct the terminal to send the second type of TA value information, reflecting the UE-satellite delay.

In the embodiments of the present disclosure, the network device obtains the TA value information sent by the terminal, and the TA value information includes at least the information of time when the TA value determined by the terminal is applied, so that the network device can accurately determine the information of available time of the TA value, and then accurately determine the TA value, thus the terminal and the network device have the consistent understanding of the TA value, and an accuracy of scheduling of the network device is improved.

It should be noted that those skilled in the art can understand that the various implementations/embodiments mentioned above in the embodiment can be used in combination with the foregoing embodiments, or can be used independently. Whether it is used alone or in combination with the foregoing embodiments, the implementation principles are similar. In the implementation of the present disclosure, some embodiments are described in the manner that the embodiments are used together. Of course, those skilled in the art can understand that such illustration is not a limitation to the embodiments of the present disclosure.

Based on the same concept, an embodiment of the present disclosure further provides an apparatus for reporting a TA value.

It can be understood that, in order to realize the above functions, the apparatus for reporting a TA value provided by the embodiment of the present disclosure includes corresponding hardware structures and/or software modules for performing various functions. In combination with the examples described in the embodiments disclosed in this specification, units and algorithm steps may be implemented by electronic hardware, computer software, or a combination thereof. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

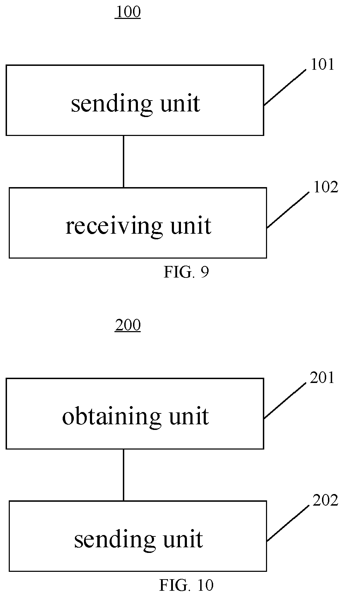

FIG. 9 is a block diagram of an apparatus for reporting a TA value according to an exemplary embodiment. Referring to FIG. 9, the apparatus 100 is applied to a terminal and includes a sending unit 101.

The sending unit 101 is configured to send TA value information to a network device, in which the TA value information at least includes information of time when the TA value is applied.

In an implementation, the sending unit 101 is configured to send a first type of TA value information to the network device, in which the first type of TA value information is configured to indicate a plurality of TA values, and TA value time information corresponding respectively to the plurality of TA values.

In an implementation, the sending unit 101 is configured to send a second type of TA value information to the network device; in which the second type of TA value information is configured to indicate a TA value calculated at a specified time.

In an implementation, the sending unit 101 is configured to determine a type of TA value information to be sent to the network device, in which the type of TA value information includes a first type of TA value information or a second type of TA value information; and send the TA value information matching the type; in which the first type of TA value information is configured to indicate a plurality of TA values, and TA value time information corresponding respectively to the plurality of TA values; the second type of TA value information is configured to indicate a TA value calculated at a specified time.

In an implementation, the TA value time information includes at least one of: a valid time of a TA value; a calculation time of a TA value; a time drift of a TA value; or a time interval between adjacent TA values.

In an implementation, the specified time is determined in at least one of following ways:
based on a time unit when the terminal receives an uplink scheduling signaling and a processing time for the uplink scheduling signaling; based on a start time unit when the terminal sends a first one of uplink signals; based on a time unit when a first one of uplink signals sent by the terminal is expected to arrive at the network device for the first time; based on an end time unit for the terminal to send a single uplink signal; or based on a time unit when a single uplink signal sent by the terminal is expected to arrive at the network device at last.

In an implementation, the way to determine the specified time is determined based on at least one of:
explicit indication information sent by the network device; implicit indication information sent by the network device; or a predefined rule.

In an implementation, the apparatus 100 further includes: a receiving unit 102, configured to receive instruction information, in which the instruction information is configured to instruct the terminal to send the first type of TA value information or to send the second type of TA value information.

In an implementation, the sending unit 101 is configured to determine the type of TA value information to be sent to the network device based on a TA value transmission duration and a transmission duration threshold; in which in a case that the TA value transmission duration is greater than or equal to the transmission duration threshold, the first type of TA value information is sent; in a case that the TA value transmission duration is less than the transmission duration threshold, the second type of TA value information is sent.

In an implementation, the TA value information is carried in a media access control (MAC) control element (CE).

FIG. 10 is a block diagram of an apparatus for reporting a TA value according to an exemplary embodiment. Referring to FIG. 10, the apparatus 200 is applied to a network device and includes an obtaining unit 201.

The obtaining unit 201 is configured to obtain TA value information sent by a terminal, in which the TA value information at least includes information of time when a TA value determined by the terminal is applied.

In an implementation, the obtaining unit 201 is configured to obtain a first type of TA value information, in which the first type of TA value information is configured to indicate a plurality of TA values, and TA value time information corresponding respectively to the plurality of TA values.

In an implementation, the obtaining unit 201 is configured to obtain a second type of TA value information, in which the second type of TA value information is configured to indicate a TA value calculated at a specified time; in which the method further includes: determining, based on the second type of TA value information, another TA value different from the TA value indicated by the second type of TA value information.

In an implementation, the TA value time information includes at least one of:
a valid time of a TA value; a calculation time of a TA value; a time drift of a TA value; or a time interval between adjacent TA values.

In an implementation, the specified time is determined in at least one of following ways:
based on a time unit when the terminal receives an uplink scheduling signaling and a processing time for the uplink scheduling signaling; based on a start time unit when the terminal sends a first one of uplink signals; based on a time unit when a first one of uplink signals sent by the terminal is expected to arrive at the network device for the first time; based on an end time unit for the terminal to send a single uplink signal; or based on a time unit when a single uplink signal sent by the terminal is expected to arrive at the network device at last.

In an implementation, the way to determine the specified time is determined based on at least one of:
explicit indication information sent by the network device; implicit indication information sent by the network device; or a predefined rule.

In an implementation, the apparatus 200 further includes: a sending unit 202 configured to send instruction information, in which the instruction information is configured to instruct the terminal to send the first type of TA value information or to send the second type of TA value information.

In an implementation, the TA value information is carried in a media access control (MAC) control element (CE).

Regarding the apparatus in the foregoing embodiments, the specific manner in which each module executes operations has been described in detail in the embodiments related to the method, and will not be described in detail here.

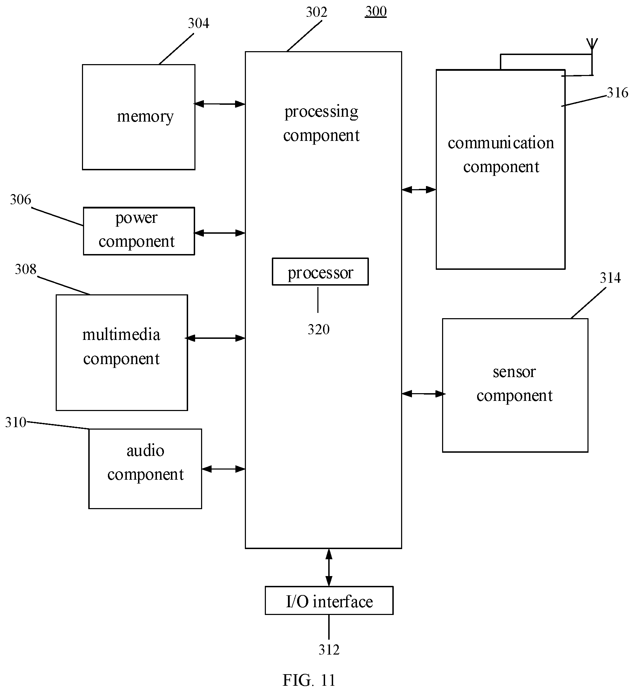

FIG. 11 is a block diagram illustrating an apparatus for reporting a TA value according to an embodiment of the disclosure. For example, the apparatus 300 may be provided as the terminal involved in the foregoing embodiments. For example, the apparatus may be a mobile phone, a computer, a digital broadcast user device, a messaging sending and receiving equipment, a game console, a tablet, a medical device, a fitness device, a personal digital assistant, or the like.

As illustrated in FIG. 11, the apparatus 300 may include one or more of: a processing component 302, a memory 304, a power component 306, a multimedia component 308, an audio component 310, an input/output (I/O) interface 312, a sensor component 314, and a communication component 316.

The processing component 302 typically controls overall operations of the apparatus 300, such as the operations associated with display, telephone calls, data communications, camera operations, and recording operations. The processing component 302 may include one or more processors 320 to execute instructions to perform all or part of the steps in the above-described methods. Moreover, the processing component 302 may include at least one module which facilitates the interaction between the processing component 302 and other components. For example, the processing component 302 may include a multimedia module to facilitate the interaction between the multimedia component 308 and the processing component 302.

The memory 304 is configured to store various types of data to support the operation of the apparatus 300. Examples of such data include instructions for any applications or methods operated on the apparatus 300, contraction data, phonebook data, messages, pictures, video, etc. The memory 304 may be implemented using any type of volatile or nonvolatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 is configured to provide power to various components of the apparatus 300. The power component 306 may include a power management system, one or more power sources, and any other components associated with the generation, management, and distribution of power in the apparatus 300.

The multimedia component 308 includes a screen providing an output interface between the apparatus 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and the rear camera may receive an external multimedia datum while the apparatus 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone ("MIC") for receiving an external audio signal when the apparatus 300 is in an operation mode, such as a call mode, a recording mode, and a speech recognition mode. The received audio signal may be further stored in the memory 304 or transmitted via the communication component 316. In some embodiments, the audio component 310 further includes a speaker to output audio signals.

The I/O interface 312 is configured to provide an interface between the processing component 302 and peripheral interface modules, such as a keyboard, a click wheel, buttons, and the like. The buttons may include, but be not limited to, a home button, a volume button, a starting button, and a locking button.

The sensor component 314 includes one or more sensors for providing status assessments of various aspects of the apparatus 300. For example, the sensor component 314 may detect an open/closed status of the apparatus 300, relative positioning of components, e.g., the display and the keypad of the apparatus 300, a change in position of the apparatus 300 or a component of the apparatus 300, a presence or absence of user contraction with the apparatus 300, an orientation or an acceleration/deceleration of the apparatus 300, and a change in temperature of the apparatus 300. The sensor component 314 may include a proximity sensor for detecting the presence of nearby objects without any physical contact. The sensor component 314 may also include a light sensor, such as a CMOS (complementary metal-oxide-semiconductor)) or a CCD (charge coupled device) image sensor, for use in imaging applications. In some embodiments, the sensor component 314 may also include an accelerometer sensor, a gyroscope sensor, a magnetic sensor, a pressure sensor, or a temperature sensor.

The communication component 316 is configured to facilitate communication, wired or wirelessly, between the apparatus 300 and other devices. The apparatus 300 may access a wireless network based on a communication standard, such as Wi-Fi, 2G, or 3G, or a combination thereof. In an exemplary embodiment, the communication component 316 receives a broadcast signal or broadcast associated information from an external broadcast management system via a broadcast channel. In an exemplary embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the apparatus 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing any of the above methods.

In an exemplary embodiment, there is also provided a non-transitory computer readable storage medium including instructions, such as the memory 304 including the instructions. The instructions may be executed by the processor 320 in the apparatus 300 for performing any of the above methods. For example, the non-transitory computer readable storage medium may be a ROM, a RAM, a CD-ROM, a magnetic tape, a floppy disc, an optical data storage device, and the like.

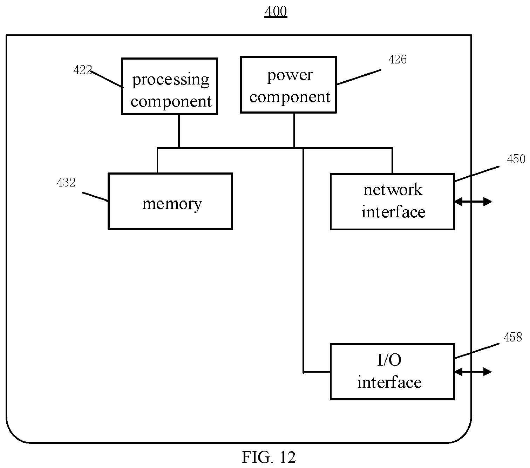

FIG. 12 illustrates a block diagram of an apparatus for reporting a TA value according to an embodiment of the disclosure. For example, the apparatus 400 may be provided as a network device. As illustrated in FIG. 12, the apparatus 400 may include a processing component 422, further including one or more processors, and memory resources represented by a memory 432 for storing instructions, such as application programs, executable by the processing component 422. The application program stored in the memory 432 may include one or more modules each corresponding to a set of instructions. In addition, the processing component 422 is configured to execute instructions to execute any of the above methods applied to the access network device, the SMF and the AMF.

The apparatus 400 may also include a power component 426 configured to perform power management of the apparatus 400, a wired or wireless network interface 450 configured to connect the apparatus 400 to a network, and an input/output (I/O) interface 458. The apparatus 400 may operate an operating system stored in the memory 432, such as a windows server ^{™}, a Mac OS X^{™}, a Unix^{™}, a Linux^{™}, a FreeBSD^{™} or the like.

In an embodiment, there is also provided a non-transitory computer-readable storage medium including instructions, such as the memory 432 including instructions, which can be executed by the processing component 422 of the apparatus 400 to implement the above methods. For example, the non-transitory computer readable storage medium may be ROM, random access memory (RAM), CD-ROM, magnetic tape, floppy disk, optical data storage device, and the like.

It should be further understood that in the present disclosure, the term "a plurality of" refers to two or more, and other quantifiers are similar. The term "and/or", which describes the association relationship of the associated objects, means that there can be three kinds of relationships, for example, A and/or B, which can mean that A exists alone, A and B exist at the same time, and B exists alone. The character "/" generally indicates an "or" relationship between the associated objects. The singular forms "a," "the," and "the" are intended to include the plural forms as well, unless the context clearly dictates otherwise.

It should be understood that although the terms "first", and "second", may be used in this disclosure to describe various information, the information should not be limited to these terms. These terms are only used to distinguish the same type of information from each other and do not imply a particular order or level of importance. In fact, the expressions "first", "second" etc. are used completely interchangeably. For example, without departing from the scope of the disclosure, the first information may also be referred to as the second information, and similarly, the second information may also be referred to as the first information.

It is further to be understood that although the operations in the embodiments of the present disclosure are described in a specific order in the drawings, it should not be construed as requiring that the operations be performed in the specific order shown or the serial order, or requiring to perform all shown operations to obtain the desired result. In certain circumstances, multitasking and parallel processing may be advantageous.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for reporting a time advance (TA) value, applied to a terminal, comprising:
sending TA value information to a network device, wherein the TA value information at least comprises information of time when a TA value determined by the terminal is applied.

2. The method of claim 1, wherein sending the TA value information to the network device comprises:
sending a first type of TA value information to the network device, wherein the first type of TA value information is configured to indicate a plurality of TA values, and TA value time information corresponding respectively to the plurality of TA values.

3. The method of claim 1, wherein sending the TA value information to the network device comprises:
sending a second type of TA value information to the network device;
wherein the second type of TA value information is configured to indicate a TA value calculated at a specified time.

4. The method of claim 1, wherein sending the TA value information to the network device comprises:
determining a type of TA value information to be sent to the network device, wherein the type of TA value information comprises a first type of TA value information or a second type of TA value information; and
sending the TA value information matching the type;
wherein the first type of TA value information is configured to indicate a plurality of TA values, and TA value time information corresponding respectively to the plurality of TA values;
the second type of TA value information is configured to indicate a TA value calculated at a specified time.

5. The method of claim 2 or 4, wherein the TA value time information comprises at least one of:
a valid time of a TA value;
a calculation time of a TA value;
a time drift of a TA value; or
a time interval between adjacent TA values.

6. The method of claim 3 or 4, wherein the specified time is determined in at least one of following ways:
based on a time unit when the terminal receives an uplink scheduling signaling and a processing time for the uplink scheduling signaling;
based on a start time unit when the terminal sends a first one of uplink signals;
based on a time unit when a first one of uplink signals sent by the terminal is expected to arrive at the network device for the first time;
based on an end time unit for the terminal to send a single uplink signal; or
based on a time unit when a single uplink signal sent by the terminal is expected to arrive at the network device at last.

7. The method of claim 6, wherein the way to determine the specified time is determined based on at least one of:
explicit indication information sent by the network device;
implicit indication information sent by the network device; or
a predefined rule.

8. The method of claim 4, wherein determining the type of TA value information to be sent to the network device comprises:
receiving instruction information, wherein the instruction information is configured to instruct the terminal to send the first type of TA value information or to send the second type of TA value information.

9. The method of claim 4, wherein determining the type of TA value information to be sent to the network device comprises:
determining the type of TA value information to be sent to the network device based on a TA value transmission duration and a transmission duration threshold;
wherein, in a case that the TA value transmission duration is greater than or equal to the transmission duration threshold, the first type of TA value information is sent;
in a case that the TA value transmission duration is less than the transmission duration threshold, the second type of TA value information is sent.

10. The method of any one of claims 1 to 4, wherein the TA value information is carried in a media access control (MAC) control element (CE).

11. A method for reporting a time advance (TA) value, applied to a network device, comprising:
obtaining TA value information sent by a terminal, wherein the TA value information at least comprises information of time when a TA value determined by the terminal is applied.

12. The method of claim 11, wherein obtaining the TA value information sent by the terminal comprises:
obtaining a first type of TA value information, wherein the first type of TA value information is configured to indicate a plurality of TA values, and TA value time information corresponding respectively to the plurality of TA values.

13. The method of claim 11, wherein obtaining the TA value information sent by the terminal comprises:
obtaining a second type of TA value information, wherein the second type of TA value information is configured to indicate a TA value calculated at a specified time;
wherein the method further comprises:
determining, based on the second type of TA value information, another TA value different from the TA value indicated by the second type of TA value information.

14. The method of claim 12, wherein the TA value time information comprises at least one of:
a valid time of a TA value;
a calculation time of a TA value;
a time drift of a TA value; or
a time interval between adjacent TA values.

15. The method of claim 13, wherein the specified time is determined in at least one of following ways:
based on a time unit when the terminal receives an uplink scheduling signaling and a processing time for the uplink scheduling signaling;
based on a start time unit when the terminal sends a first one of uplink signals;
based on a time unit when a first one of uplink signals sent by the terminal is expected to arrive at the network device for the first time;
based on an end time unit for the terminal to send a single uplink signal; or
based on a time unit when a single uplink signal sent by the terminal is expected to arrive at the network device at last.

16. The method of claim 15, wherein the way to determine the specified time is determined based on at least one of:
explicit indication information sent by the network device;
implicit indication information sent by the network device; or
a predefined rule.

17. The method of claim 12 or 13, further comprising:
sending instruction information, wherein the instruction information is configured to instruct the terminal to send the first type of TA value information or to send the second type of TA value information.

18. The method of any one of claims 11 to 13, wherein the TA value information is carried in a media access control (MAC) control element (CE).

19. An apparatus reporting a time advance (TA) value, comprising:
a sending unit configured to send TA value information to a network device, wherein the TA value information at least comprises information of time when a TA value determined by the terminal is applied.

20. An apparatus reporting a time advance (TA) value, comprising:
an obtaining unit configured to obtain TA value information sent by a terminal, wherein the TA value information at least comprises information of time when a TA value determined by the terminal is applied.

21. An apparatus reporting a time advance (TA) value, comprising:
a processor; and
a memory for storing instructions executable by the processor;
wherein, the processor is configured to perform the method for reporting a TA value of any one of claims 1 to 10.

22. An apparatus reporting a time advance (TA) value, comprising:
a processor; and
a memory for storing instructions executable by the processor;
wherein, the processor is configured to perform the method for reporting a TA value of any one of claims 11 to 18.

23. A storage medium having instructions stored therein, wherein when the instructions in the storage medium are executed by a processor of a terminal, the terminal is caused to perform the method for reporting a TA value of any one of claims 1 to 10.

24. A storage medium having instructions stored therein, wherein when the instructions in the storage medium are executed by a processor of a network device, the network device is caused to perform the method for reporting a TA value of any one of claims 11 to 18.
